# EUROPEAN PATENT APPLICATION

(11) **EP 4 827 128 A1**
(43) Date of publication of application: **21.10.2026**
(21) Application number: 25171283.2
(22) Date of filing: 17.04.2025
(51) Int. Cl.: H04W 4/44

(54) **A COMPUTER SYSTEM AND METHOD FOR VEHICLE COMMUNICATION WITH EXTERNAL EQUIPMENT**

(71) Applicant: Volvo Truck Corporation, 405 08 Göteborg (SE)
(72) Inventor: JEYABALAN, Rathinavel, 421 41 Göteborg (SE); ROSGARDT, Tommy, 437 35 Lindome (SE); SHIRE, Joshua, 411 39 Göteborg (SE); SREENIVAS, Sreekanth, 433 32 Partille (SE); KA, Veenashree, 577124 Kalasa (IN)
(74) Representative: Zacco Sweden AB

(57) **Abstract**

A computer system comprises processing circuitry configured to, upon receipt of an indication that a device external to the vehicle is connected to a vehicle or is to be connected to the vehicle, transmit a request for configuration information relating to the external device, the configuration information relating to data to be received from the external device .The processing circuitry is further configured to receive the configuration information and transmit the configuration information to another entity.

## Description

### TECHNICAL FIELD

The disclosure relates generally to vehicles and their use with external equipment. In particular aspects, the disclosure relates to a computer system and method for enabling vehicle communication with external equipment. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Some vehicles may be used with third party equipment. It may not be known at the time of manufacturing the vehicle which third party equipment the vehicle is to connect with in use.

### SUMMARY

According to a first aspect of the disclosure, a computer system comprises processing circuitry configured to, upon receipt of an indication that a device external to the vehicle is connected to a vehicle or is to be connected to the vehicle: transmit a request for configuration information relating to the external device, the configuration information relating to data to be received from the external device; receive the configuration information; and transmit the configuration information to another entity. The first aspect of the disclosure may seek to solve the problem of a vehicle not knowing what external devices or equipment that it will be connected to in use at the time of its manufacture, and solve the further problem that the vehicle, by virtue of the first aspect of the disclosure, may not need to know what external devices or equipment that it will be connected to or that it is connected to in advance of its connection. A technical benefit may include that the vehicle may not need prior knowledge of a device or equipment that it is connected to or will be connected to in order to communicate with such a device or equipment, e.g. it may not require programming or pre-programming to install the information to allow it to communicate with the external device or equipment. Rather, the first aspect of this disclosure may enable a vehicle to be used "on-the-fly" with any external device or equipment in that the first aspect enables communication with any device or equipment including those not known to the vehicle.

Optionally in some examples, including in at least one preferred example, the configuration information comprises configuration data describing how data received from the external device should be processed, and configuration instructions relating to how to interpret data received from the external device.

Optionally in some examples, including in at least one preferred example, the configuration data comprises a destination object, and wherein the configuration instructions comprise instructions relating to how to map data received from the external device onto the destination object. A technical benefit may include that an object server may be used to handle data received from the external device and to process data within the processing circuitry, thereby expanding the range of practical implementations of the first aspect of the disclosure. The configuration information may comprise a series of data identifiers ("IDs") for data whose values may be requested from the external device, which allows the object server to structure the received data for the unique IDs and place it into an object based on the object model. Hence, in some examples, including in at least one preferred example, the configuration data may comprise a series of data IDs and the configuration instructions may comprise instructions relating to how to structure received data based on the IDs to place the received data into an object based on the object model.

Optionally in some examples, including in at least one preferred example, the configuration data comprises a topic structure for data received from the external device, and wherein the configuration instructions comprise instructions relating to how to map data received from the external device onto the topic structure. A technical benefit may include that a server such as an MQTT server may be used to handle data received from the external device and to process data within the processing circuitry, thereby expanding the range of practical implementations of the first aspect of the disclosure.

Optionally in some examples, including in at least one preferred example, the processing circuitry is further configured to: receive data from the external device; and map the received data based on the configuration instructions. A technical benefit may include that the computer system according to the first disclosure can receive and then interpret data from the external device, in other words the computer system may not only be able to transmit the configuration information to another entity to enable another entity to communicate with external equipment, but the computer system itself may be configured to communicate with external equipment. In this way the computer system may be remote or may be installed in a vehicle.

Optionally in some examples, including in at least one preferred example, the configuration information further comprises at least one of: instructions relating to how to identify and connect to the external device; and instructions relating to how to retrieve data from the external device. A technical benefit may include that the computer system can program another entity to connect to, retrieve data from, and interpret data from the external device which may be advantageous if the computer system is implemented in a location remote from the vehicle such as the back office or any other location.

Optionally in some examples, including in at least one preferred example, the processing circuitry is further configured to: cause gateway circuitry of the vehicle system to be configured to find, connect to, and retrieve data from the external device. A technical benefit may include that the computer system can configure the vehicle to communicate with a third party device and may be implemented aboard the vehicle or remotely to do so.

Optionally in some examples, including in at least one preferred example, the configuration information further comprises at least one of: instructions relating to a type of data that is to be received from the external device; instructions relating to a structure of the data that is to be received from the external device; instructions relating to references which can be used to access data types; or instructions relating to how deal with no data being received from the external device. A technical benefit may include that data received from the external device can be processed and interpreted to enable robust communication to and from the external device.

Optionally in some examples, including in at least one preferred example, the configuration information further comprises at least one of: instructions relating to a security and/or authentication process to connect to the external device; instructions on how to read data from and/or write data to the external device; or instructions relating to how to deal with data exceptions while interacting with the external device. A technical benefit may include that the communication with the external device is secure.

Optionally in some examples, including in at least one preferred example, the processing circuitry is configured to receive data from at least one sensor of the external device. A technical benefit may include that the computer system can interpret the data from the external deice to determine, for example, what sensors in the external device are reading, both a type of sensed data (e.g. whether the sensors are motion sensors, temperature sensors etc.) and the value of the data itself.

According to a second aspect of the disclosure, a vehicle comprises the computer system described herein.

According to a third aspect of the disclosure, a computer-implemented method comprises, upon receipt of an indication that a device external to the vehicle is connected to a vehicle or is to be connected to the vehicle: transmitting, by processing circuitry of a computer system, a request for configuration information relating to the external device, the configuration information relating to data to be received from the external device; receiving, by the processing circuitry, the configuration information; and transmitting, by the processing circuitry, the configuration information to another entity.

Optionally in some examples, including in at least one preferred example, the configuration information comprises configuration data describing how data received from the external device should be processed, and configuration instructions relating to how to interpret data received from the external device.

Optionally in some examples, including in at least one preferred example, the configuration data comprises a destination object, and wherein the configuration instructions comprise instructions relating to how to map data received from the external device onto the destination objected. The configuration information may also comprise a series of data identifiers ("IDs") for data whose values may be requested from the external device which allows the object server to structure the received data for the unique IDs and place it into an object based on the object model. Hence, in some examples, including in at least one preferred example, the configuration data may comprise a series of data IDs and the configuration instructions may comprise instructions relating to how to structure received data based on the IDs to place the received data into an object based on the object model.

Optionally in some examples, including in at least one preferred example, the configuration data comprises a topic structure for data received from the external device, and wherein the configuration instructions comprise instructions relating to how to map data received from the external device onto the topic structure.
Optionally in some examples, including in at least one preferred example, the method further comprises: receiving, by processing circuitry, data from the external device; and mapping, by processing circuitry, the received data based on the configuration instructions.

Optionally in some examples, including in at least one preferred example, the configuration information further comprises at least one of: instructions relating to how to identify and connect to the external device; or instructions relating to how to retrieve data from the external device.

Optionally in some examples, including in at least one preferred example, the method further comprises causing, by processing circuitry, gateway circuitry of the vehicle system to be configured to find, connect to, and retrieve data from the external device.

Optionally in some examples, including in at least one preferred example, the configuration information further comprises at least one of: instructions relating to a type of data that is to be received from the external device; instructions relating to a structure of the data that is to be received from the external device; instructions relating to references which can be used to access data types; or instructions relating to how deal with no data being received from the external device.

Optionally in some examples, including in at least one preferred example, the configuration information further comprises at least one of: instructions relating to a security and/or authentication process to connect to the external device; instructions on how to read data from and/or write data to the external device; or instructions relating to how to deal with data exceptions while interacting with the external device.

According to a fourth aspect of the disclosure, a computer program product comprises program code for performing, when executed by the processing circuitry, the methods described herein.

According to a fifth aspect of the disclosure, a non-transitory computer-readable storage medium comprises instructions, which when executed by the processing circuitry, cause the processing circuitry to perform the methods described herein.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary system diagram of a vehicle in an environment according to an example.
**FIG. 2A** is an exemplary system diagram of an environment comprising a computer system, cloud server, vehicle, external device, and back office according to an example.
**FIG. 2B** is an exemplary system diagram of an environment comprising a computer system, cloud server, vehicle, external device, and back office according to an example.
**FIG. 3** is a flow chart of an exemplary method to enable vehicle communication with external equipment according to an example.
**FIGS. 4A** **and** **4B** are signaling diagrams illustrating an exemplary implementation of a method to enable vehicle communication with external equipment according to an example.
**FIG. 5** is a schematic diagram illustrating of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Devices from third parties may have unknown communication data and specifications and for a vehicle to communicate with such a third-party device (which herein should be considered synonymous with a device external to a vehicle or "external device") may pose a challenge. Particularly, at the time of the manufacture it may not be known exactly what devices the vehicle is expected to communicate with. Upon encountering any given external device, information enabling the vehicle to communicate with such a device may be loaded into the vehicle's memory but this requires the vehicle to be in a physical location so that an operator, or user, or client etc. can load the correct programming into the vehicle via a physical connection (e.g. using a cable). The present disclosure aims to address drawbacks such as these and may provide an "external-device-agnostic" system for enabling connection between a vehicle and an external device. Put another way, the present disclosure may enable a vehicle to communicate with an external device without the aforementioned prior knowledge of the device being necessary. The present disclosure may further avoid the need for the vehicle to be programmed which apart from being time consuming may require the vehicle to be in a specific location which may not always be practical and requires physical hardware to do. The present disclosure may allow a vehicle to be programmed automatically so that it is automatically configured to communicate with an external device. Thereby the present disclosure provides increased flexibility, speed, efficiency and more widespread application in the configuring of a vehicle.

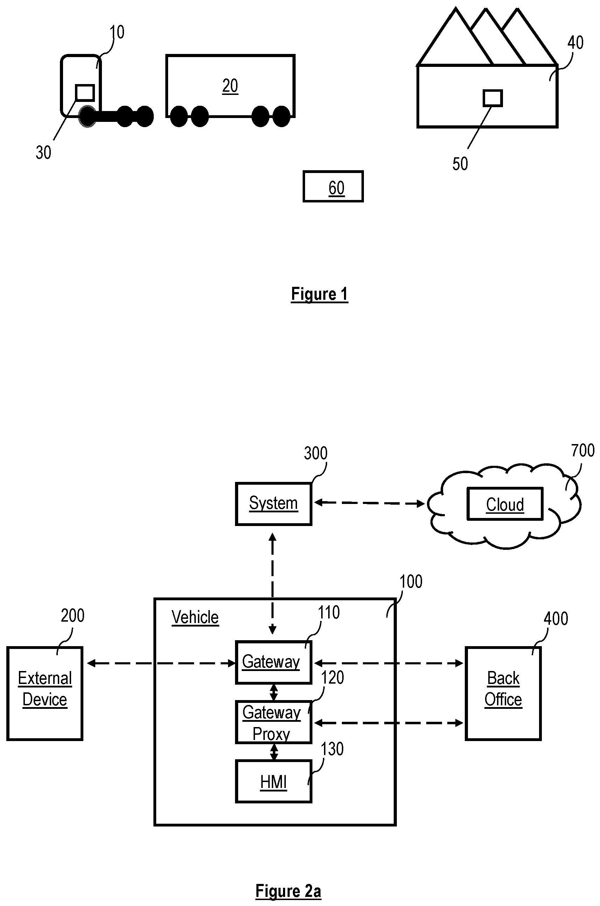

**FIG. 1** is an exemplary diagram of an environment according to an example comprising a vehicle 10. In this example the vehicle 10 is exemplified as a heavy-duty vehicle for transport, comprising a truck, or cab, or towing vehicle configured be connected to and tow a trailer. The vehicle 10 in this example is therefore configured to handle and transport heavy objects or cargo (e.g. in large quantities). An example of the vehicle 10 could be a truck or semi-trailer. The vehicle 10 may be used in any industry requiring the transport of heavy goods or cargo such as, but not limited to, construction and mining, haulage, cold storage and transport etc. Nevertheless, it will be understood that the depiction of the vehicle 10 is for exemplary and illustrative purposes only and the present disclosure may be applicable to any suitable vehicle such as electric vehicles, such as cars, BEVs, working machines, multi-trailers, rigid trucks, electric heavy-duty vehicles, scissor lifts, cherry pickers, or cars, etc.

The vehicle 10 is configured for use with an external device 20 which is depicted in Fig. 1 as a trailer unit, or trailer, but which may be any external device 20 (e.g. a body-builder device). It will be appreciated that at the time of manufacturing the vehicle 10 it may not be known exactly to which external devices 20 the vehicle 10 is to be connected in use. Indeed, the external device 20 may be provided by a third-party in the sense that the manufacturer of the external device 20 may not be the same as that of the vehicle 10. The external device 20 may therefore be considered synonymous with a "third party device" or "retrofitted device" having regard to the device's connection to the vehicle 10 post-manufacture. Communication between the vehicle 10 and external device 20 may often be required. For example, the successful completion of an operation may be more than just successful delivery of cargo in some examples. One such as example is the transportation of refrigerated goods where a successful delivery is not only that the goods were delivered on time but whether the goods are, and were maintained for the duration of the journey, below a set temperature. In examples such as these (but by no means limited to these) the vehicle 10 may communicate with the external device 20 in the sense that it may read data from sensors (e.g. temperature sensors) of the external device 20. In other examples, the vehicle 10 may communicate with the external device 20 to read, e.g. audio-visual data from audio-visual sensors of the device (e.g. when transporting goods requiring monitoring). By way of another example the vehicle 10 may communicate with the external device 20 to read data from at least one door sensor thereof (e.g. a door status sensor) to determine whether the door remains closed or has become open during a mission or route. By way of yet another example the vehicle 10 may communicate with the external device 20 to read data from at least one defrost status sensor to determine a defrost status of the external device 20. By way of yet another example the vehicle 10 may communicate with the external device 20 to read data from at least one tire pressure monitoring sensor to determine a current pressure of at least one tire of the external device 20. These examples are not exhaustive; the skilled person will understand the present disclosure's applicability to any suitable external device 20 comprising any type of sensor. Herein the vehicle 10 communicating with the external device 20 may be considered synonymous with the vehicle 10 communicating with at least one sensor of the external device 20.

The disclosure herein relates to a computer system to enable the vehicle 10 to communicate with the external device 20. The computer system comprises processing circuitry and, upon receipt of an indication that an external device 20 is connected to the vehicle 10 or is to be connected to the vehicle 10, the processing circuitry is configured to transmit a request for configuration information relating to the external device 20. The configuration information relates to data to be received from the external device 20. The configuration may comprise information relating to what external device 20 to connect to (e.g. the type of device or a specific device) and what data to receive from external device 20. For instance the configuration information may comprise a device identifier comprising information relating to what external device 20 to connect to (e.g. a type of device or a specific device) and a sensor-data identifier relating to what type of sensors and/or what type of data it is expected to receive from the external device 20. The configuration information in one example may comprise instructions to receive data from at least one sensor of the external device 20 which is to be transmitted "as-is" or in other examples the configuration information may comprise instructions to receive data from at least one sensor of the external device 20 and to further process the data. In this way, the processing circuitry can, upon any indication that communication between a vehicle 10 and an external device 20 may be required, transmit a request for the necessary information to enable that communication to be achieved. The processing circuitry is configured to receive the configuration information and to transmit the configuration information to another entity. In this way, because the configuration information to enable the vehicle to connect with an external device 20 doesn't need to be programed physically this avoids any requirement to divert a vehicle, or to delay its route as it avoids the need for the vehicle 10 to be physically located at a location that can load the configuration information into the vehicle's internal systems. As routing or rerouting a vehicle 10 to a physical location consumes energy let alone time the present disclosure may increase the efficiency and reduce the carbon emissions associated with operating a vehicle 10 or fleet of vehicles 10.

The configuration information may, in one example comprise configuration data and configuration instructions. The configuration data describes how data received from the external device should be processed and the configuration instructions relate to how to interpret data received from the external device. Depending on the example the received data may need to be fitted to a structure for it to be communicated to other components (e.g. on the vehicle 10) and therefore in some examples the configuration instructions may permit a mapping to such a structure. The configuration data may comprise at least one data identifier ("ID") identifying data and/or data values that may be requested from the external device.

The vehicle 10 may comprise a computer system 30, e.g. a vehicle computer system. The vehicle 10 may be associated with a physical building such as a back office 40 (or depot) which may comprise a computer system 50, e.g. a back-office computer system. Given that the back office 40 is remote from the vehicle the computer system is also a remote computer system. Further, the environment of Fig. 1 schematically depicts the cloud having a cloud server 60 and the vehicle computer system 30 and the back-office computer system 50 may communicate with a cloud server 60. Element 60 may also be considered to designate any location that is remote from both the vehicle computer system 30 and the back-office computer system 50. It should also be appreciated that the back office 40 is depicted schematically as a stand-alone physical location by way of example only. The back office 40 may be implemented as a cloud-based solution. Hence, the back office 40 should be considered synonymous with the cloud in some examples. The computer system comprising the processing circuitry according to the present disclosure may be party of any of the computing system 30 of the vehicle, the computing system 50 of the back-office, or a remote computing system 60 (such as that of a cloud server). For the avoidance of doubt, when the computing system is part of the vehicle computing system 30 then the vehicle 10 is configured to transmit the request for the configuration information comprising the configuration data and configuration instructions (e.g. from one circuitry internal to the vehicle to another). In this way the vehicle 10 can configure itself to communicate with the external device 20 in these examples. In this example the processing circuitry (of the vehicle computer system 30) receives the configuration information and to transmits the configuration information to other circuitry of the vehicle that is configured to communicate with the external device 20 such as gateway circuitry of the vehicle, which may be located as part of the same PCB as the computing system or which may communicate over the same bus as the computing system. On the other hand, it will be appreciated that when the processing circuitry is part of a remote computing system, in the sense of a computing system that is remote from the vehicle, such as a back-office computing system 50 or a remote system 60, then the processing circuitry is configured to, remotely, transmit the request for the configuration information comprising the configuration data and configuration instructions and receive the configuration information which the processing circuitry then transmits to the vehicle (for example to an internal system of the vehicle 10 such as a circuitry configured to communicate with the external device 20, e.g. gateway circuitry. However, in other examples, the received configuration information may be transmitted to another entity entirely such as another remote computing system or another user or the back office or a client etc.

**FIG. 2A** is an exemplary system diagram of an environment comprising a vehicle 100, e.g. the vehicle 10 of Fig. 1). The vehicle 100 comprises gateway circuitry 110 that is configured to communicate with an external device 200 (e.g. the external device 20 of Fig 1). In other words, the gateway circuitry 110 may enable communication between the vehicle 100 and the external device 200. The vehicle 100 further comprises a gateway proxy 120 which may be configured to provide communication between the gateway circuitry and any other internal system of the vehicle such as a human machine interface ("HMI") 130. The gateway circuitry 110 may be configured to transmit and receive information to and from the external device 200 and may be configured to send information received from the external device 200 to any other internal system of the vehicle via the gateway proxy 120.

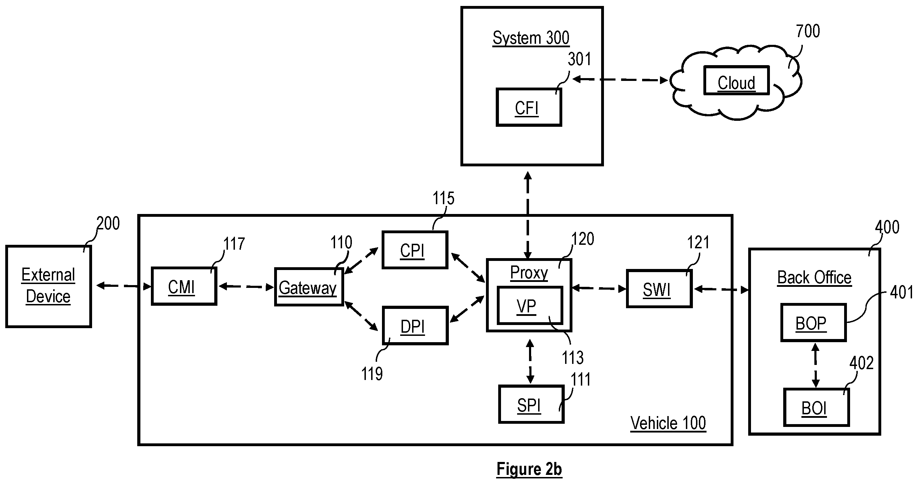

The environment of Fig. 2 further comprises a computing system 300 and a back office 400. The computing system 300 comprises the processing circuitry as discussed above and, it should be appreciated that although the computing system 300 is depicted as being external to the vehicle 100 in this example, as explained above for Fig. 1, the computing system 300 may be part of the vehicle 100 or part of the back office 400 or indeed any other location, Fig. 2 being exemplary only in this regard. As Fig. 2 shows, the vehicle 100, via the gateway circuitry 110 or gateway proxy 120 may communicate with the back office 400. The computing system 300 is further shown in association with a cloud server 700.

As discussed above with reference to Fig. 1, processing circuitry of the computing system 300 is configured to transmit the request for configuration information relating to the external device 200. The request may be transmitted by the processing circuitry to the cloud, e.g. to a cloud server 700 in which example the configuration information may be received from the cloud 700. This may therefore be done wirelessly according to any suitable wireless protocol. The processing circuitry may transmit the configuration information received from the cloud 700 to the vehicle gateway circuitry 110. In this way, the processing circuitry may cause the gateway circuitry 110 of the vehicle 100 to be configured to find, connect to, and retrieve data from the external device 200. As also discussed above this can be done remotely but the processing circuitry may be part of a vehicle computer system in which case this can be done by the vehicle. In any case, once the configuration information is known, data can be received and interpreted from the external device 200. The gateway circuitry 110 may, once it receives the configuration information from the system 300, receive data from the external device 200. This may follow the gateway circuitry 110 transmitting a request to the external device 200 for data. The data may comprise sensor data or any other data. The received data may be in any suitable form and the configuration information may be of any suitable format to interpret the data.

As stated above, the configuration may comprise information relating to what external device 200 to connect to (e.g. the type of device or a specific device) and what data to receive from external device 200. For instance the configuration information may comprise a device identifier comprising information relating to what external device 200 to connect to (e.g. a type of device or a specific device) and a sensor-data identifier relating to what type of sensors and/or what type of data it is expected to receive from the external device 200. The configuration information therefore configures the gateway circuitry 110 to find, connect to, and retrieve data from or write data to an external device 200 (which, as discussed above, may be a sensor or comprise a sensor or have control over a sensor). The configuration information may comprise additional instructions for example from the back office 400 or from an onboard application programming or HMI 130 to an onboard processor which shall configure processing circuitry (e.g. the gateway circuitry 110) to find, connect to, and retrieve data from or write data to the external device 200. The processing circuitry of the computer system 300 may be practically implemented as part of the gateway circuitry 100 in some examples. The processing circuitry (e.g. the gateway circuitry 110) may therefore be configured to search for, find, and connect to the external device 200 by virtue of this disclosure and in this way, the processing circuitry (e.g. the gateway circuitry 110) is effectively told how to connect, read, and process data from the external device and the vehicle (e.g. the software thereon) does not need to know the types of external device to which it may be connected at the time that it is manufactured. Furthermore, that the configuration information may be retrieved from the cloud 700 means that the vehicle 100 can be configured to communicate with any suitable external device 200 rather than a limited, or expected, range e.g. limited to a range of device for which it is programmed to communicate with or for which a user, client, or back office can program it to communicate with. In this way, the vehicle 100 can be configured to communicate with even new external device types, including those unknown at the type of vehicle manufacture, since the relevant configuration information may be requested and received.

The configuration information may provide instructions for how to data received from the external device should be stored. The configuration information may comprise references which any processing circuitry (e.g. the gateway circuitry 110) can use to access data values, information on data types, information on relationship between data and the structure of data, and instructions on how to handle cases where no data is received.

The configuration information may comprise additional instructions which may comprise instructions on how to identify a target device or devices (e.g. the external device 200), how to connect to the device(s) including instructions on necessary security keys or parameters, instructions on how to read or writing data from the device, how to deal with exceptions during the process of finding, connecting to, and how to interact with the device.

The configuration information may comprise instructions for reading or writing data which may comprise an indication of a supported method (e.g. BLE GATT, REST) for reading or writing data from or to the external device. The configuration information may comprise information to allow the gateway circuitry 110 to utilize the method, e.g. a defined list of values to read from a list of characteristics of certain BLE GATT Service or a specified URL that may be used to retrieve the configuration data or configuration instructions.

In one example, the configuration data of the configuration information comprises a destination object and the configuration instructions of the configuration information comprise instructions on how to map data received from the external device onto the destination object. By way of example, the object model may comprise instructions relating to how to map expected received data to a destination object. By way of example the destination object may describe one or more entities, attributes, and relationships relating to data expected to be received from the external device 200. Practically, data received from the external device may take the form of a received byte buffer or string of digits, e.g. numbers, which may require a "map" to interpret. For instance, for an external device 200 comprising a number of sensors the output of each sensor (e.g. the temperature) may be contained in the received byte buffer or string. The destination object of the configuration data in this example may comprise a structure allowing the location of such sensor outputs to be understood and the instructions on how to map data onto the destination object may allow those digits to be extracted by mapping the received string onto the structure described by the destination object. By way of a simple example the destination object may describe the structure of the data containing a location for sensor output and the instructions comprise instructions on how the string should be mapped onto the structure the result of which is that the digits in the string that constitute the output of the sensor may be identified and read. In this way, data is mapped and therefore interpreted and therefore understood. The configuration information may therefore comprise a mapping of expected received data to the destination object specified in the received object model. This received data may be complicated and comprise a number of values that may be parts of a more complex data structure (e.g. many parameters about the external device 200 may be received from the external device). However, the configuration information may allow, for example, value 'x' from characteristic 'a' from service '1' in the received data string to be set as the value for "DoorTemp" in the destination object and in this way the processing circuitry can determine that the "DoorTemp" is equal to the value x. The destination object may comprise any suitable format. In one example, the destination object may comprise JavaScript Object Notation ("JSON") In these examples the configuration information may be referred to as an "object model." The destination object may also allow the data to be stored meaningfully, e.g. stored as the value of the sensor output (such as DoorTemp = x) rather than stored as the received string. Therefore, in some examples the processing circuitry is configured to store the interpreted data according to the configuration information.

In another example the configuration data comprises a topic structure for data received from the external device, and the configuration instructions comprise instructions relating to how to map data received from the external device onto the topic structure. As above, received data from the external device 200 may be in the form of a string which the topic structure permits to be interpreted. The topic structure may comprise any suitable topic, for example an MQTT topic. The topic structure may comprise levels separated by a topic level separator. One such level may indicate "sensor data output" such and the configuration instructions comprise instructions on how to map the received data onto the topic structure such that the correct sensor output value is mapped to the sensor data output level in the topic. For example, the level "DoorTemp" may be at a particular position in the topic structure, e.g. separated by the fourth and fifth level separators " / " for example and the configuration instructions may allow the value x in the received string to be mapped to the "DoorTemp" level in the topic structure and in this way the processing circuitry can determine that the "DoorTemp" is equal to the value x. As above, the topic structure may also allow the data to be stored meaningfully, e.g. stored as the value of the sensor output (such as DoorTemp = x) rather than stored as the received string. Therefore, the processing circuitry is configured to store the interpreted data according to the configuration information.

These examples allow the data to be meaningfully interpreted although in some examples the received data may be transmitted "as-is" by the gateway proxy 120 in which example the processing circuitry may be configured to cause data received from the external device to be transmitted without any processing. In this example the gateway proxy 120 may act as a data tunnel.

In some examples the structure or object model may allow a one-to-one mapping of the received data onto a topic structure or to a data object but the mapping may not be one-to-one in all examples. In any case, this permits the data to be in a structure or form which can be understood by other components (such as other components of the vehicle like an ECU etc.).The indication that the vehicle 100 is to be connected, or is connected to, an external device may come in the form of the receipt of a signal indicating that an external device 200 is connected or is to be connected. The processing circuitry may be configured to receive such a signal. Such a signal indicating that an external device 200 is connected to the vehicle 100 or is to be connected to the vehicle 100 may be transmitted, e.g. to the processing circuitry, by a third-party application (e.g. onboard the vehicle) or by an HMI (e.g. by human, e.g. user, input) or the signal may be received from another entity, e.g. an offboard computer system effectively telling the processing circuitry about the external device 200.

It will be appreciated that the gateway circuitry 110 of the vehicle 100 may be configured to connect the vehicle 100 to the external device 200 and also to the back office 400. Put another way, the vehicle 100 may be configured to connect to the external device 200 and to the back office 400 via the gateway circuitry 110. In this way, whichever entity implements the computer system 300 comprising the processing circuitry of this disclosure (that transmits the request for and receives the configuration information etc.) the received configuration information may be transmitted to the gateway circuitry 110 (which therefore receives the configuration information) so that the gateway circuitry 110 can start communicating with the external device 200. This may be done directly, e.g. the processing circuitry can transmit the configuration information directly to the gateway circuitry 110 or the processing circuitry can transmit the configuration to another entity (such as vehicle control circuity) and the other entity can configure the gateway circuitry 110 to communicate and receive data from the external device 200. Of course the processing circuitry (the computer system) described herein may be practically implemented as part of the gateway circuitry 110 in some examples.

When the vehicle 100 connects to and starts receiving data from the external device 200 it may be the gateway circuitry 110 that receives the data. However, the gateway circuitry 110 may not process data received from the external device 200 in all examples, although it may do so. Instead, the gateway circuitry 110 may transmit data received from the external device 200 to another entity, such as further circuitry onboard the vehicle. For example, the gateway circuitry 110 may transmit data to the gateway proxy 120 and the gateway proxy 120 may be configured to transmit the data to another entity, e.g. further circuitry onboard the vehicle or to a remote location such as the back office 400 for further processing. For example, the gateway proxy 120 may be configured to transmit the data received from the external device 200 to vehicle communication circuitry. Vehicle communication circuitry may be circuitry configured to configure the gateway circuitry 110, e.g. configure the gateway circuitry to communicate with other entities such as entities external to the vehicle), for example based on the received configuration information. Such vehicle communication circuitry may be comprised in an electronic control unit or the HMI 130. Data received at the gateway proxy 120 may be transmitted to the HMI 130 or to the back office 400. To facilitate the transmission and receipt of the data there may be an application programming interface ("API") and messaging protocol between the gateway circuitry 110 and another entity such as a vehicle communication module, electronic control unit, or the HMI 130.

**FIG. 2B** shows the environment of FIG. 2A in more detail according to one example implementation. Like components are indicated with like reference numerals with reference to FIG. 2A. As for FIG. 2A, the computer system 300 comprises processing circuitry as described above and, as for FIG. 2A, the computer system 300 may be remote from the vehicle (as indicated in FIGs. 2A and 2B) but in some examples the computer system 300 may be part of the vehicle (e.g. the vehicle may comprise the computer system).

As FIG. 2B shows, the processing circuitry of the computer system 300 transmits a request for configuration information ("CFI"), in this example to the cloud 700 although the request may be transmitted to any entity (e.g. a cloud server or back office server or client server or another vehicle etc.) the received CFI (from the cloud in this example) is stored locally at 301. The processing circuitry then transmits the CFI to another entity, the gateway proxy, indicated at 120. The gateway proxy 120 comprises a vehicle processor 113 that is configured to receive and process any data. The gateway proxy 120 on receipt of the CFI 301 may configure the gateway circuitry 110 via a control plane interface ("CPI") 115 using the CFI 301. Put another way, The gateway proxy 120 recites both configuration data describing how data received from the external device should be processed and configuration instructions relating to how to interpret data received from the external device (e.g. an object model or topic structure as discussed above or any other form of data structure) and uses at least the configuration data to program the gateway circuitry 110. This configures the gateway circuitry 110 to communicate with the external device 200. The gateway circuitry 110, now configured, communicates with the external device 200 via a communication interface ("CMI") 117 and receives data from the external device 200. The gateway circuitry 110 transmits the received data via data plane ("DPI") 119 to the gateway proxy 120 where the processor 113 thereof uses the configuration instructions to interpret the received data.

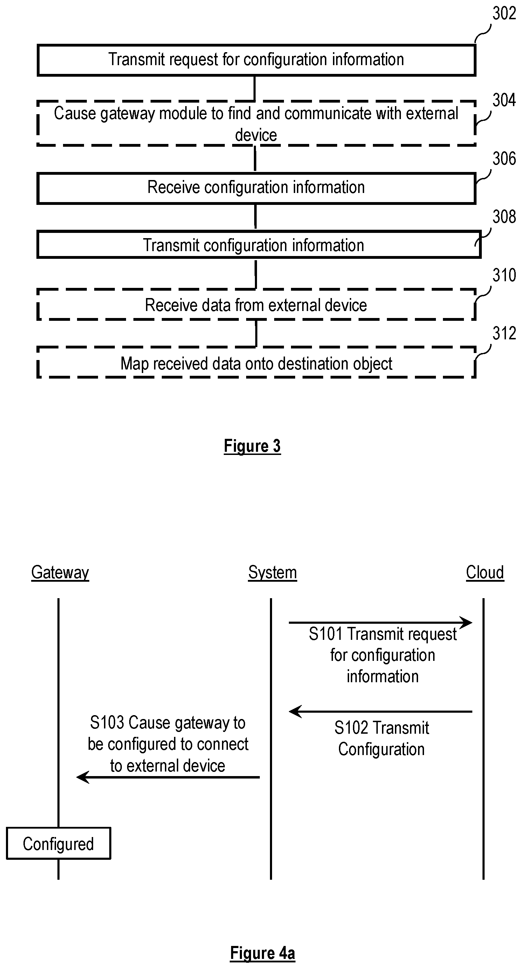

As discussed above the result of this process is that the vehicle, e.g. the gateway proxy 120 thereof, has read data from the sensors of the external device and may use that data to interface with other equipment of the vehicle (such as via a cloud-based API such as a REST-based API), e.g. the gateway proxy 120 may interface with the HMI 130 of FIG. 3. Therefore, herein, the processing circuitry configuring the gateway circuitry 110 to find and communicate with the external device 200 may be synonymous with the processing circuitry configuring a vehicle communications module to configure the gateway circuitry 110 to find and communicate with the external device 200. The processing circuitry may therefore cause the gateway proxy 120 to configure the gateway circuitry 110, and cause the gateway proxy 120 to be able to interpret received data from the external device 200. In other words, the processing circuitry may transmit the configuration data and configuration information to the gateway proxy 120, the configuration data effectively programming the gateway proxy 120 to program the gateway circuitry 110 and the configuration information effectively programming the gateway proxy 120 to interpret data received from the gateway circuitry 110.

The gateway proxy 120 may also communicate with the back office 400 (e.g. a back office processor ("BOP") 401 thereof, which may communicate with other entities via a back office interface ("BOI") 402 thereof) via an interface such as an SWI interface "SWI" 121 which may comprise any cloud communication protocol. For example, the gateway proxy 120 may transmit the received, interpreted, data from the external device 200 to the back office via SWI 121.

It will be appreciated that if the computer system 300 is provided in the back office then the processing circuitry may communicate with the gateway proxy 120 using the BOI 402 or any other suitable interface. It will also be appreciated that if the computer system 300 is provided as part of the vehicle 100 then it may be provided as part of the gateway proxy 120 or the gateway circuitry 110 or indeed as a separate circuitry component configured to interface with the gateway circuitry 110 or gateway proxy 120 (for example may be part of the same circuit board in the vehicle).

It will be appreciated that the disclosure may support a cargo monitoring service in that the external device 200 may be a trailer configured to transport cargo. The driver or operator of the vehicle may receive, via the present disclosure, a limited set of data via the HMI 130 and the driver may review the data and/or transmit the data to the back office (e.g. via the interface 121). In this way, the driver of the vehicle and a remote party such as the back office can understand the conditions of a trailer 200 and any cargo thereon although of course this could occur automatically. The back office may present the received dataset to any other entities.

The gateway circuitry 110 may comprise hardware configured to implement short range wireless connectivity capabilities that are available to the gateway proxy 120 (e.g. to software running in the gateway proxy 120), these hardware components being configurable by the gateway proxy 120 via the control plane API, CPI 115. Any suitable type of connectivity may be used, for example Bluetooth^{®} in which case the external device 200 may comprise a Bluetooth^{®} device and the API may comprise a Bluetooth^{®} API and the gateway circuitry 110 may be implemented using a Bluetooth^{®} low energy ("BLE") profile, such as a generic attribute profile ("GATT" profile), or a Bluetooth^{®} enhanced data rate (EDR) or Bluetooth basic rate (BR) or any combination thereof (e.g. existing in the same physical layer). Indeed, any suitable connectivity type may be used (e.g. Wi-Fi).

Receipt of the CFI may select and configure a predefined communication profile which may comprise several statically defined parameters such as a supported wireless protocol and security level and several run time configurable parameters. This communication profile may be read by the vehicle processor 113 and implemented by the gateway 110 via the gateway Control Plane (CPI) 115. The communication profile may permit communication between the vehicle and the third party equipment 200 in the local area via the Communications Interface (CMI) which may be a wireless interface.

The Service Platform API (SPI) 110 and Interface SWI 121 and Back Office Interface (BOI) 401 may present a numbered list of abstract objects (e.g. in the example of the object model data), e.g. *n* quantity of integers, *n* quantity of binary, *n* quantity of strings according to some example data formats. These objects may not have a defined purpose within the SWI or SP API, i.e. they may not be defined as "temperature zone 4" but may be defined as "integer0", "integer1" etc. and therefore such a data structure can be configured via the CFI as described above. This may be done at runtime.

When a communication interface is established the vehicle processor VP 113 may read the data from the third party equipment via the gateway Data Plane Interface (DPI) 119 and then map the data to SWI and SP API based upon information within the configured communication profile contained in the configuration information as described above (e.g. according to an object model or topic structure depending on the example). This may be continuous, or based on events, or both. Any data mappings within the selected communication profile may be configurable via the configuration interface. The back office processor BOP 402 may present the data received from the SWI to third parties over the internet via the Back Office Interface BOI 402.

Therefore, in some examples, configurations may be received and interpreted by the gateway proxy 120 which will use these configurations to instruct the gateway 110 to connect to the external device 200. The gateway 110 may not interpret what data is sent by and received from the external device 200 but may be able to forward the received data to the gateway proxy 120. For example the gateway proxy 120 may forward the received data "as-received", e.g. with no processing. Nevertheless, the gateway proxy 120 may be configured to interpret data in some examples, e.g. according to the configuration instructions. Therefore, any entity including the gateway proxy 120 or another entity may be configured to interpret the data based on the configuration instructions depending on the implementation of this disclosure. In the latter case, the gateway proxy 120 may act as a data tunnel to transmit the received, unprocessed, data to the other entity for interpretation.

The gateway 110 and external device 200 may communicate via BLE (e.g. BLE radio communication via BLE radios on both the gateway 110 and on the external device 200). This communication may be instructed by the gateway proxy 120.

Via this disclosure the vehicle may therefore be able to implement a communications profile to read data from the third party equipment 200 according to the communication profile, and may present the received data via interfaces (SPI 110 and SWI 121) to onboard applications and the back office 400.

The processing circuitry may enable communication between the vehicle 100 and the external device 200 in a secure way. The configuration information may comprise instructions relating to a security and/or authentication process to connect to the external device. These may be transmitted to the gateway circuitry 110. Therefore, the gateway circuitry 110 may implement necessary controls to prevent excessive or malicious wake ups such as a counter and timer which may disable the feature after a defined number of wake ups within a defined period.

The configuration information comprise any one or more of: instructions relating to a type of data that is to be received from the external device, instructions relating to a structure of the data that is to be received from the external device, instructions relating to references which can be used to access data types, instructions relating to how deal with no data being received from the external device, instructions on how to read data from and/or write data to the external device, and instructions relating to how to deal with data exceptions while interacting with the external device.

**FIG. 3** is a flow chart of an exemplary method to enable vehicle communication with external equipment according to an example.

At 302 the method comprises transmitting, by processing circuitry of a computer system, a request for configuration information relating to the external device. Block 302 may be performed on receipt of an indication that a device external to the vehicle is connected to the vehicle or is to be connected to the vehicle. The configuration information is as discussed herein.

As stated above, the indication may come in the form of the receipt of a signal indicating that an external device is connected or is to be connected and block 302 may comprise receiving such a signal. Such a signal indicating that an external device is connected to the vehicle or is to be connected to the vehicle may be transmitted, e.g. to the processing circuitry, by a third-party application (e.g. onboard the vehicle) or by an HMI (e.g. by human, e.g. user, input) or the signal may be received from another entity, e.g. an offboard computer system effectively telling the processing circuitry about the external device.

At 306 the method comprises receiving, by the processing circuitry, the configuration information and at 308 the method comprises transmitting, by the processing circuitry, the configuration information to another entity As described above with reference to FIGs. 2A and 2B, the other entity may be a gateway circuitry of the vehicle directly or communication circuitry of the vehicle (that may configure the gateway circuitry) such as a VCM.

The method may be implemented with any one or more of the following optional steps.

At 304 the method may comprise causing, by processing circuitry, gateway circuitry of the vehicle system to be configured to find, connect to, and retrieve data from the external device. This step may be referred to as configuring the gateway circuitry. The processing circuitry may configure the gateway module directly or the processing circuitry may cause vehicle communication circuitry to configure the gateway circuitry as described above with reference to FIG. 2B.

At 310 the method may comprise receiving, by processing circuitry, data from the external device and at block 312 the method comprises mapping, by processing circuitry, the received data based on the configuration instructions. Receiving, at block 310, may be performed by processing circuitry of a gateway device, e.g. gateway circuitry. Mapping, at block 312, may be performed by gateway circuitry or by vehicle communication circuitry such as that of a vehicle communications module or electronic control unit or even remote communication circuitry (for example, back office communication circuitry) depending on the example. Of course, the processing circuitry, gateway circuitry and/or the vehicle communication circuitry may be part of the same computer system depending on the implementation.

As stated above the configuration data may comprise a destination object and the configuration instructions may comprise instructions relating to how to map data received from the external device onto the destination object in some examples. In other examples, the configuration data may comprise a topic structure for data received from the external device and the configuration instructions may comprise instructions relating to how to map data received from the external device onto the topic structure.

The configuration information may comprise at least one or more of: instructions relating to a type of data that is to be received from the external device, instructions relating to a structure of the data that is to be received from the external device, instructions relating to references which can be used to access data types, instructions relating to how deal with no data being received from the external device, instructions relating to a security and/or authentication process to connect to the external device, instructions on how to read data from and/or write data to the external device, instructions relating to how to deal with data exceptions while interacting with the external device.

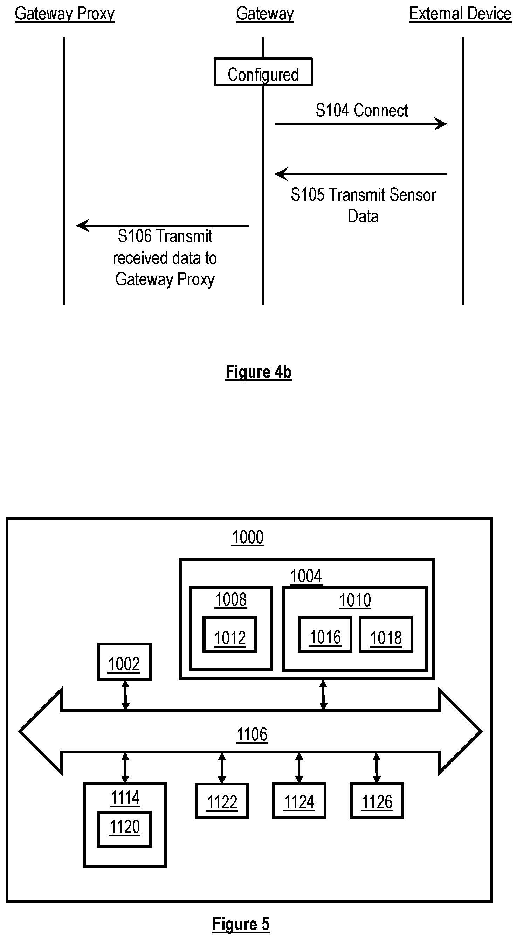

**FIGS. 4A** **and** **4B** are signaling diagrams illustrating an exemplary implementation of a method to enable vehicle communication with external equipment according to an example.

At S101 processing circuitry of a computer system transmits a request for configuration information as discussed above. This is depicted in FIG. 4A as being transmitted to the cloud but the request may be transmitted to any other entity including a back office, other vehicle, client server, internal vehicle system etc. The request may be sent over any wireless communication interface such as Wi-Fi^{®}. The request may be sent upon receipt of an indication (e.g. a signal) that the vehicle is connected to an external device or is to be connected to an external device. Such an indication or signal may be received from an external entity such as the back office, other vehicle, client server, or internal vehicle system such as an HMI (e.g. the signal may be following user input that the vehicle is to be connected or is connected to an external device).

At S102 the processing circuitry receives the configuration information and, based on the configuration information, causes, S103, gateway circuitry to be configured to connect to the external device. Causing, S103, may comprise configuring gateway circuitry 110 based on the configuration data received in the configuration information. Causing, S103, may be performed by vehicle communication circuitry, such as that of a vehicle control module (e.g. the gateway proxy 120 discussed above with reference to FIG. 2B). Therefore, S103 may in some examples comprise transmitting, by the processing circuitry of the computer system, the configuration information (e.g. the configuration data thereof) to vehicle communication circuitry which configures the gateway circuitry (configures the vehicle communication circuitry to configure the gateway circuitry) to communicate with the external device. The outcome of this part of the process is that the gateway circuitry is configured to communicate with the external device.

With reference to **FIG. 4B****,** once configured the gateway circuitry 110 may connect to the external device, S104, which transmits sensor data, S105, to the gateway circuitry 110. The gateway circuitry 110 therefore receives the sensor data. The gateway circuitry 110 may transmit the received sensor data to a gateway proxy, S106, which may transmit the sensor data to vehicle communication circuitry such as the gateway proxy 120 discussed above, that may use the configuration instructions to interpret the data, which may include mapping the sensor data onto a destination object described in an object model or a topic structure depending on the format of the data. The interpreted (e.g. mapped) data may then be sent to other applications such as in-vehicle applications such as a human-machine interface or may be transmitted to a remote location such as the back office as discussed above.

**FIG. 5** is a schematic diagram of a computer system 1000 for implementing examples disclosed herein. The computer system 1000 is adapted to execute instructions from a computer-readable medium to perform these and/or any of the functions or processing described herein. The computer system 1000 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system comprising processing circuitry configured to, upon receipt of an indication that a device external to the vehicle is connected to a vehicle or is to be connected to the vehicle:
transmit a request for configuration information relating to the external device, the configuration information relating to data to be received from the external device;
receive the configuration information; and
transmit the configuration information to another entity.

Example 2. The computer system of Example 1, wherein the configuration information comprises:
configuration data describing how data received from the external device should be processed; and
configuration instructions relating to how to interpret data received from the external device.

Example 3: The computer system of Example 2, wherein the configuration data comprises a destination object, and wherein the configuration instructions comprise instructions relating to how to map data received from the external device onto the destination object.

Example 4: The computer system of Example 2, wherein the configuration data comprises a topic structure for data received from the external device, and wherein the configuration instructions comprise instructions relating to how to map data received from the external device onto the topic structure.

Example 5: The computer system of any of Examples 1-4, wherein the processing circuitry is further configured to:
receive data from the external device; and
map the received data based on the configuration instructions.

Example 6: The computer system of any of Examples 1-5, wherein the configuration information further comprises at least one of:
instructions relating to how to identify and connect to the external device; or
instructions relating to how to retrieve data from the external device.

Example 7: The computer system of any of Examples 1-6, wherein the processing circuitry is further configured to:
cause gateway circuitry of the vehicle system to be configured to find, connect to, and retrieve data from the external device.

Example 8: The computer system of any of Examples 1-7, wherein the configuration information further comprises at least one of:
instructions relating to a type of data that is to be received from the external device;
instructions relating to a structure of the data that is to be received from the external device;
instructions relating to references which can be used to access data types;
instructions relating to how deal with no data being received from the external device;
instructions relating to a security and/or authentication process to connect to the external device;
instructions on how to read data from and/or write data to the external device; or
instructions relating to how to deal with data exceptions while interacting with the external device.

Example 9: The computer system of any of Examples 1-8, wherein the processing circuitry is configured to receive data from at least one sensor of the external device.

Example 10: A vehicle comprising the computer system of any of Examples 1-9.

Example 11: A computer-implemented method comprising, upon receipt of an indication that a device external to the vehicle is connected to a vehicle or is to be connected to the vehicle:
transmitting, by processing circuitry of a computer system, a request for configuration information relating to the external device, the configuration information relating to data to be received from the external device;
receiving, by the processing circuitry, the configuration information; and
transmitting, by the processing circuitry, the configuration information to another entity.

Example 12. The method of Example 11, wherein the configuration information comprises:
configuration data describing how data received from the external device should be processed; and
configuration instructions relating to how to interpret data received from the external device.

Example 13: The method of Example 12, wherein the configuration data comprises a destination object, and wherein the configuration instructions comprise instructions relating to how to map data received from the external device onto the destination objected.

Example 14: The method of Example 12, wherein the configuration data comprises a topic structure for data received from the external device, and wherein the configuration instructions comprise instructions relating to how to map data received from the external device onto the topic structure.

Example 15: The method of any of Examples 11-14, further comprising:
receiving, by processing circuitry, data from the external device; and
mapping, by processing circuitry, the received data based on the configuration instructions.

Example 16: The method any of Examples 11-15, wherein the configuration information further comprises at least one of:
instructions relating to how to identify and connect to the external device; or
instructions relating to how to retrieve data from the external device.

Example 17: The method of any of Examples 11-16, further comprising:
causing, by processing circuitry, gateway circuitry of the vehicle system to be configured to find, connect to, and retrieve data from the external device.

Example 18: The method of any of Examples 11-17, wherein the configuration information further comprises at least one of:
instructions relating to a type of data that is to be received from the external device;
instructions relating to a structure of the data that is to be received from the external device;
instructions relating to references which can be used to access data types;
instructions relating to how deal with no data being received from the external device;
instructions relating to a security and/or authentication process to connect to the external device;
instructions on how to read data from and/or write data to the external device; or
instructions relating to how to deal with data exceptions while interacting with the external device.

Example 19: A computer program product comprising program code for performing, when executed by the processing circuitry, the method of any of Examples 11-18.

Example 20: A non-transitory computer-readable storage medium comprising instructions, which when executed by the processing circuitry, cause the processing circuitry to perform the method of any of Examples 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system comprising processing circuitry configured to, upon receipt of an indication that a device external to the vehicle is connected to a vehicle or is to be connected to the vehicle:
transmit a request for configuration information relating to the external device, the configuration information relating to data to be received from the external device;
receive the configuration information; and
transmit the configuration information to another entity.

2. The computer system of claim 1, wherein the configuration information comprises:
configuration data describing how data received from the external device should be processed; and
configuration instructions relating to how to interpret data received from the external device.

3. The computer system of claim 2, wherein the configuration data comprises a destination object, and wherein the configuration instructions comprise instructions relating to how to map data received from the external device onto the destination object.

4. The computer system of claim 2, wherein the configuration data comprises a topic structure for data received from the external device, and wherein the configuration instructions comprise instructions relating to how to map data received from the external device onto the topic structure.

5. The computer system of any of claims 1-4, wherein the processing circuitry is further configured to:
receive data from the external device; and
map the received data based on the configuration instructions.

6. The computer system of any of claims 1-5, wherein the processing circuitry is further configured to:
cause gateway circuitry of the vehicle system to be configured to find, connect to, and retrieve data from the external device.

7. The computer system of any of claims 1-6, wherein the configuration information further comprises at least one of:
instructions relating to how to identify and connect to the external device;
instructions relating to how to retrieve data from the external device;
instructions relating to a type of data that is to be received from the external device;
instructions relating to a structure of the data that is to be received from the external device;
instructions relating to references which can be used to access data types;
instructions relating to how deal with no data being received from the external device;
instructions relating to a security and/or authentication process to connect to the external device;
instructions on how to read data from and/or write data to the external device; or
instructions relating to how to deal with data exceptions while interacting with the external device.

8. A computer-implemented method comprising, upon receipt of an indication that a device external to the vehicle is connected to a vehicle or is to be connected to the vehicle:
transmitting, by processing circuitry of a computer system, a request for configuration information relating to the external device, the configuration information relating to data to be received from the external device;
receiving, by the processing circuitry, the configuration information; and
transmitting, by the processing circuitry, the configuration information to another entity.

9. The method of claim 8, wherein the configuration information comprises:
configuration data describing how data received from the external device should be processed; and
configuration instructions relating to how to interpret data received from the external device.

10. The method of claim 9, wherein the configuration data comprises a destination object, and wherein the configuration instructions comprise instructions relating to how to map data received from the external device onto the destination objected.

11. The method of claim 9, wherein the configuration data comprises a topic structure for data received from the external device, and wherein the configuration instructions comprise instructions relating to how to map data received from the external device onto the topic structure.

12. The method of any of claims 8-11, further comprising:
receiving, by processing circuitry, data from the external device; and
mapping, by processing circuitry, the received data based on the configuration instructions.

13. The method of any of claims 8-12, further comprising:
causing, by processing circuitry, gateway circuitry of the vehicle system to be configured to find, connect to, and retrieve data from the external device.

14. The method of any of claims 8-13, wherein the configuration information further comprises at least one of:
instructions relating to how to identify and connect to the external device;
instructions relating to how to retrieve data from the external device;
instructions relating to a type of data that is to be received from the external device;
instructions relating to a structure of the data that is to be received from the external device;
instructions relating to references which can be used to access data types;
instructions relating to how deal with no data being received from the external device;
instructions relating to a security and/or authentication process to connect to the external device;
instructions on how to read data from and/or write data to the external device; or
instructions relating to how to deal with data exceptions while interacting with the external device.

15. A computer program product comprising program code for performing, when executed by the processing circuitry, the method of any of claims 8-14, or a non-transitory computer-readable storage medium comprising instructions, which when executed by the processing circuitry, cause the processing circuitry to perform the method of any of claims 8-14, or a vehicle comprising the computer system of any of claims 1-7.
